# EUROPÄISCHE PATENTSCHRIFT

(11) **EP 3 357 318 B1**
(45) Veröffentlichungstag und Bekanntmachung des Hinweises auf die Patenterteilung: **11.09.2019**
(21) Anmeldenummer: 18401011.4
(22) Anmeldetag: 30.01.2018
(51) Int. Cl.: A01C 5/06, A01C 7/20, A01C 7/06

(54) **SCHARAUFHÄNGUNG**
COULTER SUSPENSION
SUSPENSION DE SOC

(30) Priorität: 07.02.2017 DE 102017102310
(43) Veröffentlichungstag der Anmeldung: 08.08.2018
(73) Patentinhaber: Amazonen-Werke H. Dreyer GmbH & Co. KG, 49205 Hasbergen (DE)
(72) Erfinder: Bohlen, Eike, 28215 Bremen (DE)

(56) Entgegenhaltungen:
- EP-A1- 2 954 768
- EP-A1- 2 984 917
- DE-A1-102007 027 088
- US-A1- 2007 044 694

## Beschreibung

Die Erfindung betrifft eine Scharaufhängung nach dem Oberbegriff des Patentanspruchs 1, eine Scharanordnung nach dem Oberbegriff des Patentanspruchs 5 und eine Sämaschine nach dem Oberbegriff des Patentanspruchs 7.

Scharaufhängungen für Sämaschinen weisen häufig eine Lenkeranordnung auf, welcher einen beweglichen Oberlenker und einen beweglichen Unterlenker umfasst, wobei der Unterlenker unterhalb des Oberlenkers angeordnet ist und eine in Fahrtrichtung verlaufende Längsachse aufweist.

Solche Lenkeranordnungen sind üblicherweise dazu eingerichtet, ein Säaggregat an der Scharaufhängung zu befestigen. Säaggregate können beispielsweise ein Säschar zum Ausbringen von Saatgut umfassen, wobei die Ausbringtiefe des Saatguts oder der von dem Säschar auf den Boden ausgebübte Druck mittels der Scharaufhängung einstellbar sein können. Eine Sämaschine mit einer solchen Lenkeranordnung ist beispielsweise aus der Druckschrift EP 2 984 917 A1 bekannt.

Darüber hinaus können die Scharanordnungen von Sämaschinen neben einem Säaggregat auch ein Düngerschar aufweisen, sodass das Saatgut und der Dünger in einem gemeinsamen Arbeitsvorgang ausgebracht werden können. Eine Sämaschine zum gemeinsamen Ausbringen von Saatgut und Dünger ist beispielsweise aus der Druckschrift EP 1 216 608 A1 bekannt.

Diese und andere Scharanordnungen haben den Nachteil, dass das Säaggregat und das Düngerschar vergleichsweise weit beabstandet voneinander angeordnet sind. Eine kompakte Bauform lässt sich bei den bekannten Scharanordnungen nicht umsetzen, da eine Anordnung des Düngerschars im Bereich der Lenkeranordnung nicht möglich ist. Bekannte Lenkeranordnungen beanspruchen nämlich den Bauraum, welcher für die Umsetzung einer geeigneten Beweglichkeit des Düngerschars notwendig ist. Um eine Kollision von Düngerschar und Lenkeranordnung zu vermeiden, ist das Düngerschar also vor der Lenkeranordnung zu positionieren, woraus wiederum eine nachteilige Maschinenlänge resultiert. Es ist dabei auch nachteilig, dass wegen des großen Abstands zwischen Düngerschar und Säschar die Ablagetiefe korrespondierenden Materials verschieden sein kann.

Die der Erfindung zugrunde liegende Aufgabe besteht somit darin, die Scharanordnungen einer zum gemeinsamen Ausbringen von Saatgut und Dünger ausgebildeten Sämaschine kompakter zu gestalten.

Die Aufgabe wird gelöst durch eine Scharaufhängung der eingangs genannten Artmit einem beweglichen Tragarm, welcher dazu eingerichtet ist, ein Düngerschar an der Scharaufhängung zu befestigen, wobei der Tragarm und/oder das Düngerschar abschnittsweise in die seitliche Ausnehmung des Unterlenkers verbringbar sind.

Die Erfindung macht sich die Erkenntnis zunutze, dass durch die quer zur Längsachse des Unterlenkers verlaufende seitliche Ausnehmung, welche auch als seitliche Einbuchtung bezeichnet werden kann, ausreichend freier Bauraum geschaffen wird, damit ein Düngerschar unterhalb der Scharaufhängung angeordnet werden kann. Durch die seitliche Ausnehmung in dem Unterlenker der Scharaufhängung hat das Düngerschar somit ausreichend Freiraum, um Bewegungen nach oben auszuführen, welche beispielsweise zum Ausweichen vor feststehenden Hindernissen, wie hervorstehenden Steinen, notwendig sind, um eine Beschädigung der Scharaufhängung und somit eine Beschädigung der Sämaschine zu vermeiden.

Der Oberlenker und der Unterlenker können Bestandteile eines Parallelogramm-Gestänges sein, wobei das Parallelogramm-Gestänge dazu eingerichtet sein kann, an einem Querbalken, welcher quer zur Fahrtrichtung verläuft, befestigt zu werden. Die Breite der seitlichen Ausnehmung in dem Unterlenker wird durch dessen Erstreckung quer zur Fahrtrichtung definiert. Vorzugsweise liegt die Breite der seitlichen Ausnehmung in dem Unterlenker in einem Bereich zwischen 40 Millimetern und 85 Millimetern, insbesondere bei etwa 64 Millimetern. Die Länge der seitlichen Ausnehmung wir durch dessen Erstreckung in Fahrtrichtung definiert. Vorzugsweise liegt die Länge der seitlichen Ausnehmung in dem Unterlenker in einem Bereich zwischen 250 Millimetern und 400 Millimetern, insbesondere bei etwa 315 Millimetern. Vorzugsweise ist die seitliche Ausnehmung in dem Unterlenker an die Größe des Düngerschars angepasst. Die seitliche Ausnehmung in dem Unterlenker kann breiter oder schmaler als die Breite des Düngerschars sein oder eine identische Breite wie das Düngerschar aufweisen. Die seitliche Ausnehmung in dem Unterlenker kann länger oder kürzer als die Länge des Düngerschars sein oder eine identische Länge wie das Düngerschar aufweisen. Das an dem Unterlenker und dem Oberlenker angeordnete Säaggregat kann ein Säschar, eine oder mehrere Tragrollen zum Abstützen der Scharaufhängung und/oder der gesamten Scharanordnung gegenüber dem Boden, eine Fangrolle zum Auffangen und Andrücken des abgegebenen Saatguts und/oder eine oder mehrere Andruckrollen zum Bedecken der Saatfurche mit Boden und zum Andrücken des Bodens über der zugedeckten Saatfurche umfassen.

In einer besonders bevorzugten Ausführungsform der erfindungsgemäßen Scharaufhängung weist der Unterlenker in dem Bereich der seitlichen Ausnehmung eine Außenkontur auf, welche einen oder mehrere nach innen gebogene Konturabschnitte umfasst. Insbesondere weisen der eine oder die mehreren nach innen gebogenen Konturabschnitte jeweils einen konstanten Radius auf. Vorzugsweise weist die Außenkontur des Unterlenkers in dem Bereich der seitlichen Ausnehmung zwei nach innen gebogene Konturabschnitte auf, wobei sich die zwei nach innen gebogenen Konturabschnitte vorzugsweise jeweils über einen Winkelbereich von 90 Grad erstrecken.

Die erfindungsgemäße Scharaufhängung wird ferner dadurch vorteilhaft weitergebildet, dass die Außenkontur zwischen zwei nach innen gebogenen Konturabschnitten einen im Wesentlichen parallel zur Längsachse verlaufenden Konturabschnitt umfasst. Vorzugsweise weist der Unterlenker eine vordere Gelenklasche und eine hintere Gelenklasche auf, wobei die vordere Gelenklasche und die hintere Gelenklasche jeweils dazu eingerichtet sind, einen Gelenkbolzen aufzunehmen, mittels welchem der Unterlenker gelenkig angelenkt werden kann.

In einer anderen Ausführungsform der erfindungsgemäßen Scharaufhängung ist der Unterlenker einstückig ausgebildet. Insbesondere ist der Unterlenker mittels eines Urform-Fertigungsverfahrens, wie beispielsweise Gießen, hergestellt. Vorzugsweise ist der Unterlenker als Gusskörper ausgebildet. Alternativ oder zusätzlich kann der Unterlenker spanend bearbeitete Lenkerabschnitte aufweisen. Der Unterlenker kann ferner eine oder mehrere interne Ausnehmungen aufweisen, welche insbesondere der Gewichtsreduzierung und der Verringerung des Materialeinsatzes dienen. Außerdem kann der Unterlenker eine oder mehrere Rippen zur Versteifung und/oder zur Erhöhung der Festigkeit aufweisen.

Der Oberlenker und der Unterlenker sind vorzugsweise mittels eines Federelements, insbesondere mittels eines einstellbaren Federelements, miteinander verbunden. Vorzugsweise lassen sich über das Federelement die Ablagetiefe des Saatguts und/oder der Schardruck eines Säschars einstellen.
Der Verbindungspunkt des Federelements an dem Oberlenker ist vorzugsweise veränderbar. Insbesondere weist der Oberlenker mehrere Steckplätze auf, wobei das Federelement zur Veränderung des Verbindungspunkts des Federelements an dem Oberlenker in den Steckplätzen befestigt werden kann. Das Federelement ist vorzugsweise an einem Punkt an dem Unterlenker angelenkt, welcher sich auf der Längsachse des Unterlenkers befindet, wobei die Längsachse die vordere und die hintere Gelenklasche des Unterlenkers halbiert.

Außerdem ist eine erfindungsgemäße Scharaufhängung bevorzugt, welche einen beweglichen Tragarm aufweist. Der Tragarm ist dazu eingerichtet, ein Düngerschar an der Scharaufhängung zu befestigen, wobei der Tragarm und/oder das Düngerschar abschnittsweise in die seitliche Ausnehmung des Unterlenkers verbringbar sind. Vorzugsweise ist der Tragarm derart schwenkbar angelenkt, dass durch eine Schwenkbewegung des Tragarms ein an dem Tragarm befestigtes Düngerschar verschwenkt wird. Die Schwenkbarkeit des Tragarms, insbesondere um eine horizontal und quer zur Fahrtrichtung verlaufende Schwenkachse, erlaubt beispielsweise das Ausweichen vor feststehenden Hindernissen, wie hervorstehenden Steinen. Auf diese Weise kann eine Beschädigung der Scharaufhängung und somit eine Beschädigung der Sämaschine effektiv vermieden werden.

Die der Erfindung zugrunde liegende Aufgabe wird ferner gelöst durch eine Scharanordnung der eingangs genannten Art, wobei die Scharaufhängung der erfindungsgemäßen Scharanordnung nach einer der vorstehend beschriebenen Ausführungsformen ausgebildet ist und an dem Oberlenker und dem Unterlenker ein Säaggregat befestigt ist. Das Säaggregat kann ein Säschar, eine oder mehrere Tragrollen zum Abstützen der Scharanordnung gegenüber dem Boden, eine Fangrolle zum Auffangen und Andrücken des abgegebenen Saatguts und/oder eine oder mehrere Andruckrollen zum Bedecken der Saatfurche mit Boden und zum Andrücken des Bodens über der zugedeckten Saatfurche umfassen. Hinsichtlich der weiteren Vorteile und Modifikationen der erfindungsgemäßen Scharanordnung wird auf die Vorteile und Modifikationen der erfindungsgemäßen Scharaufhängung verweisen.

In einer besonders bevorzugten Ausführungsform der erfindungsgemäßen Scharanordnung ist an dem Tragarm der Scharaufhängung ein Düngerschar befestigt, welches unterhalb der seitlichen Ausnehmung des Unterlenkers angeordnet und in Richtung der seitlichen Ausnehmung verschwenkbar ist. Das Düngerschar kann eine oder mehrere Scheiben aufweisen. Insbesondere kann das Düngerschar als Einscheiben-Düngerschar oder als Doppelscheiben-Düngerschar ausgebildet sein. Durch die Befestigung des Düngerschars an dem schwenkbaren Tragarm kann auch das Düngerschar ausgelenkt werden. Die seitliche Ausnehmung des Unterlenkers, welche oberhalb des Düngerschars angeordnet ist, schafft ausreichend Freiraum für eine Schwenkbewegung des Düngerschars nach oben. Die Tiefe des Düngerschars und somit die Dünger-Abgabetiefe kann dabei über Absteckpositionen im Unterlenker verstellbar sein.

Die der Erfindung zugrunde liegende Aufgabe wird außerdem gelöst durch eine Sämaschine der eingangs genannten Art, wobei die eine oder die mehreren Scharanordnungen der erfindungsgemäßen Sämaschine nach einer der vorstehend beschriebenen Ausführungsformen ausgebildet sind. Hinsichtlich der Vorteile und Modifikationen der erfindungsgemäßen Sämaschine wird auf die Vorteile und Modifikationen der erfindungsgemäßen Scharanordnung und der erfindungsgemäßen Scharaufhängung verweisen.

In einer weiteren Ausführungsform weist die erfindungsgemäße Sämaschine zumindest eine erste Scharanordnung und zumindest eine zweite Scharanordnung auf. Bei der ersten Scharanordnung ist das Düngerschar seitlich rechts von dem Säaggregat angeordnet. Bei der zweiten Scharanordnung ist das Düngerschar seitlich links von dem Säaggregat angeordnet. Erfindungsgemäß weisen die erste Scharanordnung und die zweite Scharanordnung identisch ausgebildete Unterlenker auf, wobei der Unterlenker der ersten Scharanordnung 180 Grad um eine in Fahrtrichtung verlaufende Achse gegenüber dem Unterlenker der zweiten Scharanordnung gedreht ist. Die Bauform des Unterlenkers erlaubt den Einsatz sowohl linksseitig als auch rechtsseitig der Maschinenmitte beziehungsweise die Anordnung des Düngerschars linksseitig und rechtsseitig der Saatfurche. Der Unterlenker der ersten Scharanordnung und der Unterlenker der zweiten Scharanordnung weisen somit eine Händigkeit auf, welche den Einsatz eines entsprechenden Unterlenkers in unterschiedlichen Konfigurationen einer Scharanordnung erlaubt. Der Unterlenker der zweiten Scharanordnung entspricht vorzugsweise einer Spiegelung des Unterlenkers der ersten Scharanordnung an einer seitlich von dem ersten Unterlenker aufgespannten Spiegelebene, sodass der Unterlenker der ersten Scharanordnung und der Unterlenker der zweiten Scharanordnung chiral zueinander ausgebildet sind.

Weitere Einzelheiten der Erfindung sind der Figurenbeschreibung und den Zeichnungen zu entnehmen. Es zeigen
- Fig. 1: ein Ausführungsbeispiel eines Säaggregats mit der erfindungsgemäßen Scharanordnung in einer perspektivischen Darstellung;
- Fig. 2: ein Ausführungsbeispiel der erfindungsgemäßen Scharaufhängung in einer perspektivischen Darstellung;
- Fig. 3: ein weiteres Ausführungsbeispiel der erfindungsgemäßen Scharaufhängung in einer Seitenansicht;
- Fig. 4: die Scharaufhängung aus der Fig. 3 mit einem nach oben ausgelenkten Düngerschar in einer Seitenansicht;
- Fig. 5: die Scharaufhängung aus der Fig. 3 und der Fig. 4 mit einem nach oben ausgelenkten Düngerschar in einer perspektivischen Darstellung;
- Fig. 6: ein Ausführungsbeispiel eines Unterlenkers der erfindungsgemäßen Scharaufhängung in einer Draufsicht; und
- Fig. 7: den Unterlenker aus der Fig. 6 um 180 Grad um die Längsachse gedreht in einer Draufsicht.

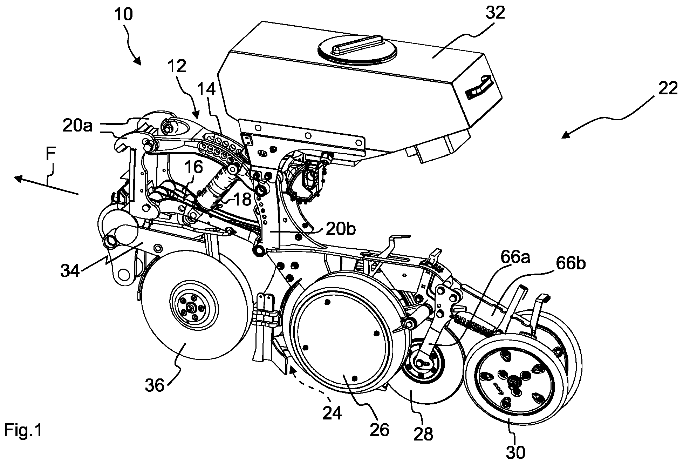

Die Fig. 1 zeigt eine Scharanordnung 10 einer Sämaschine. Die Scharanordnung 10 weist eine Scharaufhängung 12 auf, welche einen beweglichen Oberlenker 14 und einen beweglichen Unterlenker 16 umfasst. Der Unterlenker 16 ist unterhalb des Oberlenkers 14 angeordnet.

Der Oberlenker 14 und der Unterlenker 16 sind über ein zwischen dem Oberlenker 14 und dem Unterlenker 16 angeordnetes Federelement 18 miteinander verbunden. Der Anlenkpunkt des Federelements 18 an dem Oberlenker 14 ist veränderbar. Hierzu weist der Oberlenker 14 mehrere Steckplätze 42 zur Befestigung des Federelements 18 auf.

Der Oberlenker 14 und der Unterlenker 16 sind an einer ersten Seite an den Anlenkplatten 20a und an einer zweiten Seite an den Anlenkplatten 20b angelenkt. Der Oberlenker 14 und der Unterlenker 16 sind Bestandteile eines Parallelogramm-Gestänges und dazu eingerichtet, über die Anlenkplatten 20a an einem Querbalken befestigt zu werden, welcher quer zur Fahrtrichtung F verläuft.

An dem Oberlenker 14 und dem Unterlenker 16 ist über die Anlenkplatten 20b ein Säaggregat 22 befestigt. Durch das Parallelogramm-Gestänge kann das Säaggregat 22 einerseits Druck gegen den Erdboden aufbringen und andererseits aus der dargestellten Position nach oben ausgelenkt werden.

Das Säaggregat 22 umfasst ein Säschar 24 (verdeckt), zwei Tragrollen 26, eine Fangrolle 28, zwei Andruckrollen 30, einen Saatgut-Vorratsbehälter 32 und eine Kornvereinzelungseinrichtung (nicht dargestellt).

Die Kornvereinzelungseinrichtung dient der Vereinzelung der Saatgutkörner aus dem Saatgut-Vorratsbehälter 32. Die Kornvereinzelungseinrichtung kann beispielsweise nach dem Prinzip der Überdruck-Vereinzelung oder nach dem Prinzip der Saugluftvereinzelung arbeiten.

Das Säschar 24 kann Schneidscheiben aufweisen und beispielsweise als Doppelscheiben-Säschar ausgebildet sein. Das Säschar 24 kann außerdem einen Furchenformer aufweisen, welcher eine Furche freiräumt und im Unterboden festdrückt. Die gewünschte Saatgut-Ablagetiefe lässt sich durch eine Verstellung des Parallelogramm-Gestänges individuell einstellen. Die Einstellung erfolgt unabhängig von der Einstellung seitlich benachbarter Scharanordnungen (nicht dargestellt), sodass sich auch einzelne Scharanordnungen 10, beispielsweise in einer Schlepperspur, tiefer einstellen lassen.

Die Tragrollen 26 stützen die gesamte Scharanordnung 10 gegenüber dem Boden ab. Die Tragrollen 26 weisen jeweils eine breite Aufstandsfläche auf, wodurch ein guter Bodenkontakt und eine hohe Laufruhe gewährleistet werden. An der Lauffläche der Tragrollen 26 können Abstreiferelemente angeordnet sein, welche bei klebrigen Bodenverhältnissen für die Sauberkeit und somit für eine uneingeschränkte Funktionstüchtigkeit der Tragrollen 26 sorgen.

Die Fangrolle 28 fängt das ausgegebene Saatgut auf und drückt dieses in der Saatfurche an. Hierzu schließt die Fangrolle 28 unten und an den Seitenwänden formschlüssig mit der Saatfurche ab, so dass die Körner auch bei ungünstigen Bodenverhältnissen nicht verrollen, sondern zuverlässig aufgefangen und angedrückt werden. Die Fangrolle 28 kann direkt hinter dem Furchenformer angeordnet sein, damit die Ablagequalität auch bei zunehmender Fahrgeschwindigkeit konstant bleibt. Die Fangrolle 28 ist an einer Befestigungsstrebe 66a befestigt.

Die Andruckrollen 30 decken die Saatfurche mit Boden zu und drücken ihn über der zugedeckten Furche an. Der Andruckwinkel, der Öffnungswinkel und/oder die Öffnungsweite der Andruckrollen 30 können einstellbar sein, um die Andruckeigenschaften auf unterschiedliche Bodenverhältnisse anpassen zu können. Alternativ können auch Walkgummireifen eingesetzt werden, welche sich beispielsweise besonders für die Maissaat eignen. Die Andruckrollen 30 sind an einer Befestigungsstrebe 66b befestigt.

Die Scharaufhängung 12 umfasst außerdem einen beweglichen Tragarm 34, an welchem ein Düngerschar 36 befestigt ist. Das Düngerschar 36 ist zur Ablage von Dünger in den Boden ausgebildet und als Doppelscheiben-Düngerschar ausgeführt. Alternativ kann das Düngerschar 36 auch als Einscheiben-Düngerschar ausgeführt sein. Der Tragarm 34 ist schwenkbar angelenkt und erlaubt ein Ausschwenken des Düngerschars 36 nach oben. Aufgrund der quer zu der Längsachse des Unterlenkers 16 verlaufenden seitlichen Ausnehmung des Unterlenkers 16 kann das Düngerschar 36 unterhalb des Unterlenkers 16 angeordnet sein, wobei der Tragarm 34 und das Düngerschar 36 abschnittsweise in die seitliche Ausnehmung des Unterlenkers 16 verbringbar sind.

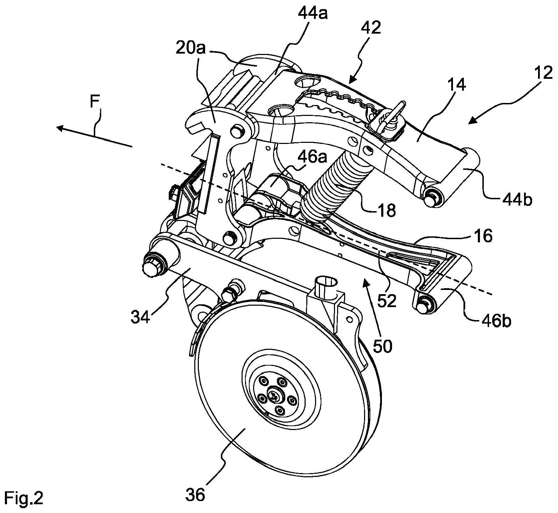

Die Fig. 2 zeigt eine alternative Ausführungsform des Oberlenkers 14. Anders als der Oberlenker 14 aus der Fig. 1, sind die Steckplätze 42 für das Federelement 18 nicht als separate Bohrungen, sondern durch eine zentrale Ausnehmung ausgebildet, welche eine Einrast-Kontur mit mehreren Einrast-Positionen für das Federelement 18 aufweist.

Der Oberlenker 14 weist außerdem eine vordere Gelenklasche 44a und eine hintere Gelenklasche 44b auf, wobei in der vorderen Gelenklasche 44a und in der hinteren Gelenklasche 44b jeweils ein Gelenkbolzen angeordnet ist, mittels welchem der Oberlenker 14 gelenkig an den Anlenkplatten 20a, 20b (20b in Fig. 2 nicht dargestellt) befestigt werden kann. Der Unterlenker 16 weist ebenfalls eine vordere Gelenklasche 46a und eine hintere Gelenklasche 46b auf, wobei in der vorderen Gelenklasche 46a und in der hinteren Gelenklasche 46b jeweils ein Gelenkbolzen angeordnet ist, mittels welchem der Unterlenker 16 gelenkig an den Anlenkplatten 20a, 20b (20b in Fig. 2 nicht dargestellt) befestigt werden kann.

Der Unterlenker 16 weist eine in Fahrtrichtung F verlaufende Längsachse 52 auf, wobei die Längsachse 52 die vordere und die hintere Gelenklasche 46a, 46b des Unterlenkers 16 halbiert. Das Federelement 18 ist an einem Punkt an dem Unterlenker 16 angelenkt, welcher sich auf der Längsachse 52 des Unterlenkers 16 befindet.

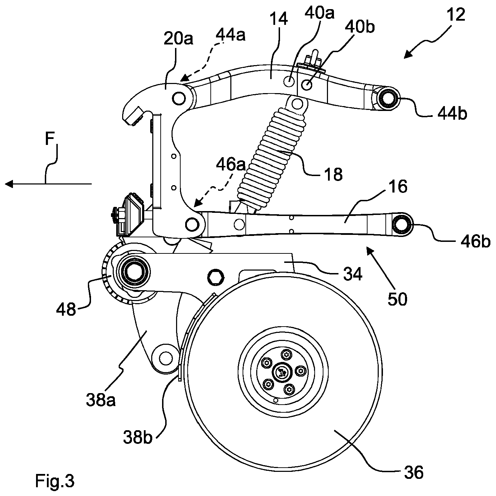

Die Fig. 3 zeigt, dass der Oberlenker 14 neben einer zentralen Ausnehmung mit einer Einrast-Kontur außerdem zwei Bohrungen 40a, 40b aufweisen kann, welche ebenfalls zur Befestigung des Federelements 18 verwendet werden können. Ferner umfasst die Scharanordnung 10 ein Anschlagselement 38a, welches die Schwenkbewegung des Düngerschars 36 nach unten beschränkt. Darüber hinaus weist die Scharanordnung 10 eine Verstelleinheit 48 auf, welche zum Einstellen des Tragarms 34 und/oder zum Einstellen des Anschlagselements 38a ausgebildet sein kann.

In dem in der Fig. 3 dargestellten Zustand befindet sich das Düngerschar 36 in einer abgesenkten Position, wobei in diesem Zustand ein an dem Düngerschar 36 angeordnetes Anschlagsblech 38b in Kontakt mit dem Anschlagselement 38a steht, wodurch ein weiteres Absenken des Düngerschars 36 verhindert wird.

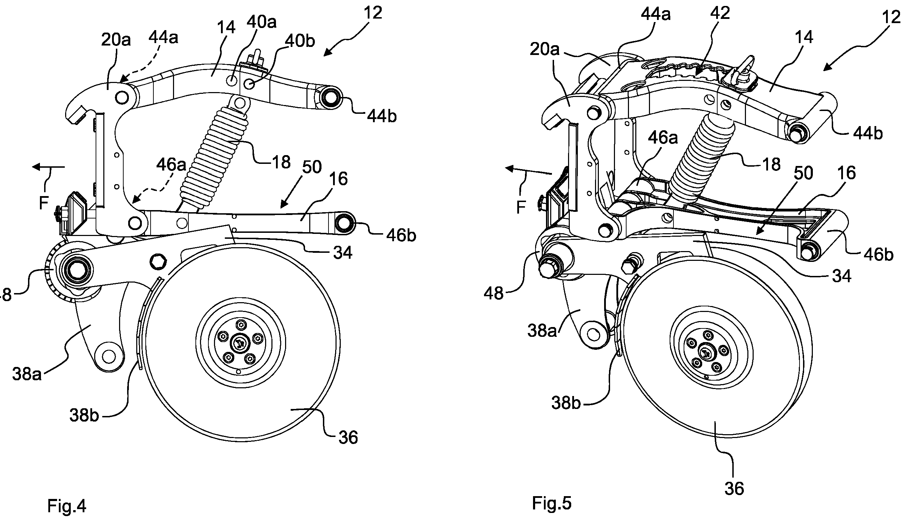

In dem in der Fig. 4 und der Fig. 5 dargestellten Zustand befindet sich das Düngerschar 36 in einer nach oben ausgelenkten Position. Dieser Zustand kann hervorgerufen werden, wenn das Düngerschar 36 auf ein feststehendes Hindernis, wie beispielsweise einen hervorstehenden Stein, trifft. Durch die Schwenkbarkeit des Tragarms 34 kann das Düngerschar 36 selbsttätig ausweichen, sodass eine Beschädigung der Scharanordnung 10 und somit eine Beschädigung der Sämaschine vermieden wird.

Durch das Auslenken des Tragarms 34 und des Düngerschars 36 wird ein oberer Abschnitt des Tragarms 34 in eine seitliche Ausnehmung 50 des Unterlenkers 16 bewegt. Durch diese seitliche Ausnehmung 50 kann das Düngerschar 36 unterhalb des den Oberlenker 14 und den Unterlenker 16 umfassenden Parallelogramm-Gestänges angeordnet sein, da der durch die seitliche Ausnehmung 50 resultierende freie Bauraum eine ausreichende Schwenkbarkeit des Tragarms 34 und des Düngerschars 36 gewährleistet.

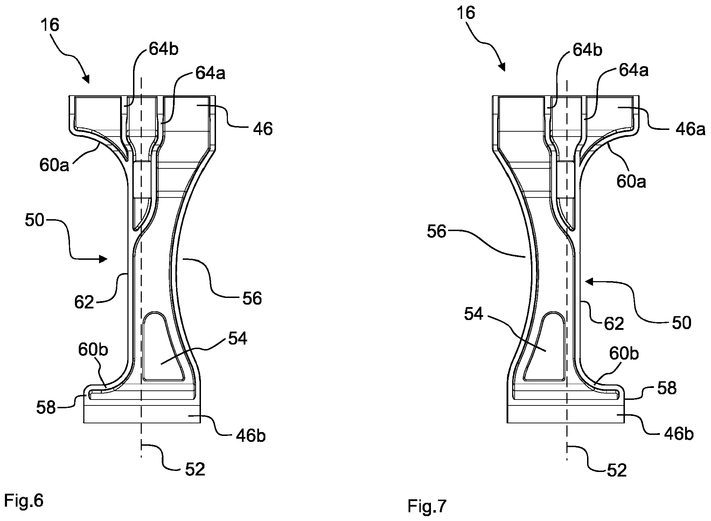

Die Fig. 6 und die Fig. 7 zeigen den gleichen Unterlenker 16, wobei der in der Fig. 7 dargestellte Unterlenker 16 180 Grad um die Längsachse 52 gegenüber dem in Fig. 6 dargestellten Unterlenker 16 gedreht ist.

Der Unterlenker 16 weist eine quer zu seiner Längsachse 52 verlaufende seitliche Ausnehmung 50 auf. Gleichzeitig erstreckt sich die seitliche Ausnehmung 50 parallel zur Längsachse 52. Der Unterlenker 16 weist in dem Bereich der seitlichen Ausnehmung 50 eine Außenkontur 58 auf, welche zwei nach innen gebogene Konturabschnitte 60a, 60b und einen zwischen den zwei nach innen gebogenen Konturabschnitten 60a, 60b angeordneten und im Wesentlichen parallel zur Längsachse 52 verlaufenden Konturabschnitt 62 umfasst.

Auf der, der seitlichen Ausnehmung 50 gegenüberliegenden Seite des Unterlenkers 16 ist eine seitliche Einbuchtung 56 angeordnet. Der Unterlenker 16 weist in dem Bereich der seitlichen Einbuchtung 56 eine durchgängig gebogene Außenkontur 58 auf.

Ferner ist der Unterlenker 16 einstückig ausgebildet. Der Unterlenker weist mehrere Rippen 64a, 64b auf, welche die Festigkeit und die mechanische Belastbarkeit des Unterlenkers 16 erhöhen. Darüber hinaus weist der Unterlenker 16 eine interne Ausnehmung 54 auf, welche der Gewichtsreduzierung und der Materialersparnis dient.

Die Bauform des dargestellten Unterlenkers 16 und die daraus resultierende Möglichkeit, den Unterlenker 16 auch spiegelbildlich einbauen zu können, erlaubt die Anordnung des Düngerschars 36 linksseitig und rechtsseitig der Saatfurche und somit den Einsatz des Unterlenkers 16 sowohl linksseitig als auch rechtsseitig der Maschinenmitte. Der in Fig. 7 dargestellte Unterlenker 16 entspricht somit einer Spiegelung des in Fig. 6 dargestellten Unterlenkers 16 an einer seitlich von dem Unterlenker 16 aufgespannten und rechtwinklig zu der Papierebene verlaufenden Spiegelebene, sodass der in Fig. 6 dargestellte Unterlenker 16 und der in Fig. 7 dargestellte Unterlenker 16 chiral zueinander ausgebildet sind.

### Bezugszeichenliste

- 10: Scharanordnung
- 12: Scharaufhängung
- 14: Oberlenker
- 16: Unterlenker
- 18: Federelement
- 20a, 20b: Anlenkplatten
- 22: Säaggregat
- 24: Säschar
- 26: Tragrollen
- 28: Fangrolle
- 30: Andruckrollen
- 32: Vorratsbehälter
- 34: Tragarm
- 36: Düngerschar
- 38a, 38b: Anschlagselement, Anschlagsblech
- 40a, 40b: Bohrungen
- 42: Steckplätze
- 44a, 44b: Gelenklaschen
- 46a, 46b: Gelenklaschen
- 48: Verstelleinheit
- 50: seitliche Ausnehmung
- 52: Längsachse
- 54: interne Ausnehmung
- 56: Einbuchtung
- 58: Außenkontur
- 60a, 60b: nach innen gebogene Konturabschnitte
- 62: Konturabschnitt
- 64a, 64b: Rippen
- 66a, 66b: Befestigungsstreben
- F: Fahrtrichtung

## Patentansprüche

1. Scharaufhängung (12) für eine Sämaschine, mit
- einem beweglichen Oberlenker (14); und
- einem beweglichen Unterlenker (16), welcher unterhalb des Oberlenkers (14) angeordnet ist und eine in Fahrtrichtung (F) verlaufende Längsachse (52) aufweist;
wobei der Oberlenker (14) und der Unterlenker (16) dazu eingerichtet sind, gemeinsam ein Säaggregat (22) an der Scharaufhängung (12) zu befestigen; und wobei der Unterlenker (16) eine quer zu seiner Längsachse (52) verlaufende seitliche Ausnehmung (50) aufweist, **gekennzeichnet durch** einen beweglichen Tragarm (34), welcher dazu eingerichtet ist, ein Düngerschar (36) an der Scharaufhängung (12) zu befestigen, wobei der Tragarm (34) und/oder das Düngerschar (36) abschnittsweise in die seitliche Ausnehmung (50) des Unterlenkers (16) verbringbar sind.

2. Scharaufhängung (12) nach Anspruch 1,
**dadurch gekennzeichnet, dass** der Unterlenker (16) in dem Bereich der seitlichen Ausnehmung (50) eine Außenkontur (58) aufweist, welche einen oder mehrere nach innen gebogene Konturabschnitte (60a, 60b) umfasst.

3. Scharaufhängung (12) nach Anspruch 2,
**dadurch gekennzeichnet, dass** die Außenkontur (58) zwischen zwei nach innen gebogenen Konturabschnitten (60a, 60b) einen im Wesentlichen parallel zur Längsachse (52) verlaufenden Konturabschnitt (62) umfasst.

4. Scharaufhängung (12) nach einem der vorstehenden Ansprüche,
**dadurch gekennzeichnet, dass** der Unterlenker (16) einstückig ausgebildet ist.

5. Scharanordnung (10), mit
- einer Scharaufhängung (12);
**dadurch gekennzeichnet, dass** die Scharaufhängung (12) nach einem der vorstehenden Ansprüche ausgebildet ist, wobei an dem Oberlenker (14) und dem Unterlenker (16) ein Säaggregat (22) befestigt ist.

6. Scharanordnung (10) nach Anspruch 5,
**dadurch gekennzeichnet, dass** an dem Tragarm (34) der Scharaufhängung (12) ein Düngerschar (36) befestigt ist, welches unterhalb der seitlichen Ausnehmung (50) des Unterlenkers (16) angeordnet und in Richtung der seitlichen Ausnehmung (50) verschwenkbar ist.

7. Sämaschine, mit
- einer oder mehreren Scharanordnungen (10);
**dadurch gekennzeichnet, dass** die eine oder die mehreren Scharanordnungen (10) nach Anspruch 6 ausgebildet sind.

8. Sämaschine nach Anspruch 7, mit
- zumindest einer ersten Scharanordnung (10), bei welcher das Düngerschar (36) seitlich rechts von dem Säaggregat (22) angeordnet ist; und
- zumindest einer zweiten Scharanordnung (10), bei welcher das Düngerschar (36) seitlich links von dem Säaggregat (22) angeordnet ist;
**dadurch gekennzeichnet, dass** die erste Scharanordnung (10) und die zweite Scharanordnung (10) identisch ausgebildete Unterlenker (16) aufweisen, wobei der Unterlenker (16) der ersten Scharanordnung (10) 180 Grad um eine in Fahrtrichtung (F) verlaufende Achse gegenüber dem Unterlenker (16) der zweiten Scharanordnung (10) gedreht ist.

## Claims

1. Coulter suspension (12) for a seed drill, having
- a movable upper link (14); and
- a movable lower link (16), which is arranged beneath the upper link (14) and has a longitudinal axis (52) extending in the direction of travel (F);
wherein the upper link (14) and the lower link (16) are set up to jointly fasten a sowing unit (22) to the coulter suspension (12);
and wherein the lower link (16) has a lateral recess (50) extending transversely to its longitudinal axis (52), **characterized by** a movable support arm (34), which is set up to fasten a fertilizer coulter (36) to the coulter suspension (12), wherein the support arm (34) and/or the fertilizer coulter (36) are able to be moved partially into the lateral recess (50) in the lower link (16).

2. Coulter suspension (12) according to Claim 1, **characterized in that** the lower link (16) has, in the region of the lateral recess (50), an external contour (58) that comprises one or more inwardly curved contour portions (60a, 60b).

3. Coulter suspension (12) according to Claim 2, **characterized in that** the external contour (58) comprises, between two inwardly curved contour portions (60a, 60b), a contour portion (62) extending substantially parallel to the longitudinal axis (52).

4. Coulter suspension (12) according to one of the preceding claims,
**characterized in that** the lower link (16) is formed in one piece.

5. Coulter arrangement (10) having
- a coulter suspension (12);
**characterized in that** the coulter suspension (12) is configured according to one of the preceding claims, wherein a sowing unit (22) is fastened to the upper link (14) and the lower link (16).

6. Coulter arrangement (10) according to Claim 5, **characterized in that** a fertilizer coulter (36) is fastened to the support arm (34) of the coulter suspension (12), said fertilizer coulter (36) being arranged beneath the lateral recess (50) in the lower link (16) and being pivotable in the direction of the lateral recess (50).

7. Seed drill having
- one or more coulter arrangements (10);
**characterized in that** the one or more coulter arrangements (10) are configured according to Claim 6.

8. Seed drill according to Claim 7, having
- at least one first coulter arrangement (10), in which the fertilizer coulter (36) is arranged laterally to the right of the sowing unit (22); and
- at least one second coulter arrangement (10), in which the fertilizer coulter (36) is arranged laterally to the left of the sowing unit (22);
**characterized in that** the first coulter arrangement (10) and the second coulter arrangement (10) have identically configured lower links (16), wherein the lower link (16) of the first coulter arrangement (10) has been rotated through 180 degrees about an axis extending in the direction of travel (F) with respect to the lower link (16) of the second coulter arrangement (10).

## Revendications

1. Suspension de soc (12) pour un semoir, comprenant
- un bras oscillant supérieur mobile (14) ; et
- un bras oscillant inférieur mobile (16) qui est disposé en dessous du bras oscillant supérieur (14) et qui présente un axe longitudinal (52) s'étendant dans la direction de conduite (F) ;
le bras oscillant supérieur (14) et le bras oscillant inférieur (16) étant prévus pour fixer ensemble un élément semeur (22) sur la suspension de soc (12) ; et
le bras oscillant inférieur (16) présentant un évidement latéral (50) s'étendant transversalement à son axe longitudinal (52), **caractérisée par** un bras porteur mobile (34) qui est prévu pour fixer un soc à engrais (36) à la suspension de soc (12), le bras porteur (34) et/ou le soc à engrais (36) pouvant être amenés en partie dans l'évidement latéral (50) du bras oscillant inférieur (16).

2. Suspension de soc (12) selon la revendication 1, **caractérisée en ce que** le bras oscillant inférieur (16) présente, dans la région de l'évidement latéral (50), un contour extérieur (58) qui comprend une ou plusieurs portions de contour (60a, 60b) courbées vers l'intérieur.

3. Suspension de soc (12) selon la revendication 2, **caractérisée en ce que** le contour extérieur (58) présente, entre deux portions de contour (60a, 60b) courbées vers l'intérieur, une portion de contour (62) s'étendant essentiellement parallèlement à l'axe longitudinal (52).

4. Suspension de soc (12) selon l'une quelconque des revendications précédentes,
**caractérisée en ce que** le bras oscillant inférieur (16) est réalisé d'une seule pièce.

5. Agencement de soc (10), comprenant
- une suspension de soc (12) ;
**caractérisé en ce que** la suspension de soc (12) est réalisée selon l'une quelconque des revendications précédentes, un élément semeur (22) étant fixé au niveau du bras oscillant supérieur (14) et du bras oscillant inférieur (16).

6. Agencement de soc (10) selon la revendication 5, **caractérisé en ce qu'**un soc à engrais (36) est fixé au niveau du bras porteur (34) de la suspension de soc (12), lequel est disposé en dessous de l'évidement latéral (50) du bras oscillant inférieur (16) et peut pivoter dans la direction de l'évidement latéral (50).

7. Semoir, comprenant
- un ou plusieurs agencements de soc (10) ;
**caractérisé en ce que** le ou les agencements de soc (10) sont réalisés selon la revendication 6.

8. Semoir selon la revendication 7, comprenant
- au moins un premier agencement de soc (10), dans lequel le soc à engrais (36) est disposé latéralement à droite de l'élément semeur (22) ; et
- au moins un deuxième agencement de soc (10), dans lequel le soc à engrais (36) est disposé latéralement à gauche de l'élément semeur (22) ;
**caractérisé en ce que** le premier agencement de soc (10) et le deuxième agencement de soc (10) présentent des bras oscillants inférieurs (16) réalisés de manière identique, le bras oscillant inférieur (16) du premier agencement de soc (10) étant tourné de 180° autour d'un axe s'étendant dans la direction de conduite (F) par rapport au bras oscillant inférieur (16) du deuxième agencement de soc (10).
